# EUROPEAN PATENT APPLICATION

(11) **EP 4 183 575 A1**
(43) Date of publication of application: **24.05.2023**
(21) Application number: 21209711.7
(22) Date of filing: 22.11.2021
(51) Int. Cl.: B32B 17/10, B60Q 3/208, G02B 6/00, F21V 8/00

(54) **A TRANSPARENT ROOF PANEL ASSEMBLY FOR A VEHICLE ROOF**

(71) Applicant: Inalfa Roof Systems Group B.V., 5807 GW Oostrum (NL)
(72) Inventor: van Doleweerd, Theodorus, 6024 AK Budel-Dorplein (NL); Geurts, Stephan Paulus Jan, 5951 BS Belfeld (NL)
(74) Representative: De Vries & Metman

(57) **Abstract**

A transparent roof panel assembly (100) for a vehicle roof (1) comprises a transparent panel and a light source (21; 104) arranged to provide light in the panel. The panel comprises a first transparent ply (101) of rigid material having a first main surface and a second main surface opposite the first main surface and a first transparent layer (103) of flexible material arranged adjacent to the first main surface. The light source is configured to provide light (105) in the first transparent ply such that at least a part of the light propagates between the first main surface and the second main surface through the first transparent ply. A light outcoupling pattern (106) is arranged between the first main surface of the first transparent ply and the first transparent layer. The light outcoupling pattern is for scattering at least a part of the light propagating in the first transparent ply such that at least a part of the propagating light (107) exits the first transparent ply through the second main surface. A second transparent layer (109) of flexible material is provided above the first transparent layer on a side thereof opposite to the first transparent ply, the second transparent layer (109) having a transparency which is less than that of the first transparent layer (103).

## Description

The invention relates to a transparent roof panel assembly for a vehicle the roof panel assembly comprising
- a panel having at least a transparent area, the panel being configured to be arranged over an opening in the vehicle roof to allow visible light to pass in a first direction through the transparent area, the first direction extending between an exterior of the vehicle and an interior of the vehicle and substantially perpendicular to a surface of the panel
- a light source arranged to provide light in the panel in a second direction, wherein the second direction is substantially perpendicular to the first direction,
the panel comprising:
- a first transparent ply of rigid material having a first main surface and a second main surface opposite the first main surface,
- a first transparent layer of flexible material arranged adjacent to the first main surface
- the light source being configured to provide light in the first transparent ply such that at least a part of the light propagates between the first main surface and the second main surface through the first transparent ply, and
- a light outcoupling pattern arranged between the first main surface of the first transparent ply and the first transparent layer, wherein the light outcoupling pattern is configured for scattering at least a part of the light propagating in the first transparent ply such that at least a part of the propagating light exits the first transparent ply through the second main surface.

A transparent roof assembly for a vehicle is generally known. For example, a glass panel is arranged over an opening in the roof of a vehicle to allow sunlight to enter an interior of the vehicle through the roof. In a known transparent roof assembly, the at least partly transparent panel is fixedly arranged over the opening, while in another known transparent roof assembly the panel is moveably arranged. In particular, the moveably arranged panel may be tiltable and/or slidable.

Further, it is known to arrange a light source in a vicinity of an edge of the at least partly transparent panel such that light emitted by the light source is injected into the panel and the light propagates through the panel, wherein the panel functions as a light guide. In order to direct the light into the interior of the vehicle, light out-coupling structures are provided. For example, light reflecting dots may be arranged on a first surface of the panel. Light propagating in the panel and impinging on such reflective dots on the first surface is then redirected towards an opposite, second surface and leaves the panel at the second surface, thereby illuminating the interior of the vehicle.

It is known to select a reduced light transmission in the at least partly transparent panel in order to:
- reduce energy transmission (lower cabin temperature / lower energy influx)
- reduce exterior luminance level of light emitted by the light source.

Regarding the latter point it is noted that the light source couples out a significant part of the light to the exterior side. Some car manufacturers may want to reduce that exterior light level by absorbing it in the panel.

The above can be achieved by providing a dark interlayer or by providing a dark upper ply (e.g., 10% light transmission). When applying a dark upper ply, an even lower light transmission (which we have already seen in especially various fixed panel applications on EV's) may be desired, in which case a dark interlayer may be needed to lower the light transmission. However, a dark interlayer attached to the first ply would affect the light efficiency of the light guide. Without being bound by theory, this may be a result of the fact that more light is absorbed within the dark interlayer.

It is one of the objects to provide a roof panel assembly in which the above-mentioned disadvantages are removed or at least reduced.

For these and other purposes, the invention provides a roof panel assembly comprising a second transparent layer of flexible material provided above the first transparent layer on a side thereof opposite to the first transparent ply, the second transparent layer having a transparency which is less than that of the first transparent layer.

By providing a second transparent layer on top of the first transparent layer which is darker than the first transparent layer, the same advantages can be accomplished as mentioned above, however without the disadvantages as described, because the layer adjacent to the first ply can now be suitably selected to achieve a desired lighting effect and light efficiency.

The roof panel assembly may also comprise a second transparent ply of rigid material provided above the second transparent layer and having a transparency which is equal to or less than that of the first transparent ply. This leads to a sandwich panel which may have a very low visible light transparency.

For example, the first ply and/or the first transparent layer may have a visible-light transparency larger than 50%, preferably larger than 70% and more preferably larger than 80%.

On the other hand, the second transparent layer may have a visible-light transparency such that the total visible light transparency of the panel is between 5 and 30%, preferably between 8 and 20%. If also a second ply is arranged which is darker than the first ply, then the total visible-light transparency will be even lower, or the transparency for the second ply and/or second layer can be somewhat higher, depending on the requirements of the vehicle manufacturer.

To further improve the characteristics of the panel assembly one or more coatings or layers having a low UV and IR transmission are arranged between the second transparent layer and the second transparent ply.

In one embodiment, a functional layer, such as an optically switchable layer and optionally a third transparent layer are arranged between the second transparent layer and the second transparent ply, wherein the third transparent layer may have a transparency which is equal to or less than that of the first transparent layer.

Said optically switchable layer can be used to change the total transparency of the panel assembly. The third layer may be used to reduce the visibility of the functionally layer.

The first transparent ply and the second transparent ply are preferably made of glass or plastics to obtain a rigid structure.

The first and/or second transparent layer is made as a foil of plastics like EVA or PVB to obtain a thin flexible layer which hardly increases the total thickness of the panel assembly.

The invention will be further elucidated with reference to the drawing showing embodiments of the roof panel assembly.
Fig. 1 is a perspective view of a vehicle roof comprising an open roof system.
Fig. 2 is an illustration of a lightguide and an outcoupling pattern on a panel.
Fig. 3A and 3D are simplified cross-sections, not on scale, of two embodiments of a roof panel assembly.
Fig. 3B and 3C illustrate two possibilities of providing an outcoupling pattern on the roof panel assembly.

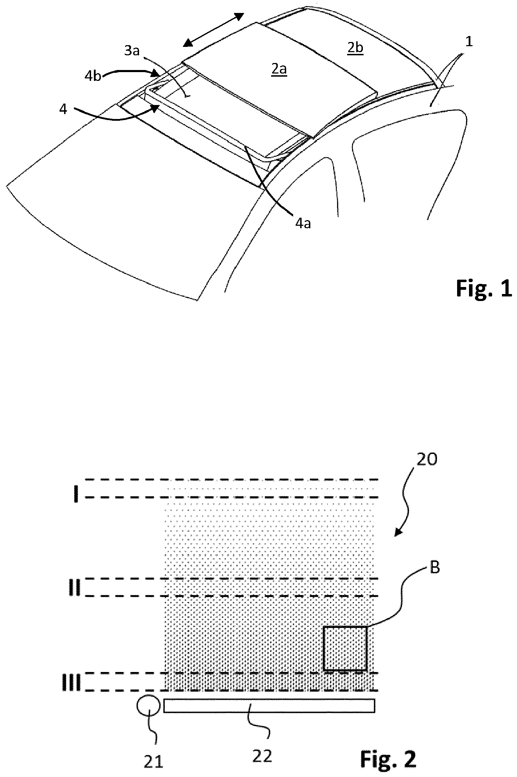

Fig. 1 illustrates a vehicle roof 1 having an open roof assembly arranged therein. The open roof assembly comprises a moveable panel 2a and a fixed panel 2b. The moveable panel 2a is also referred to as a closure member since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be moved to a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end of the moveable panel 2a is raised as compared to the closed position, while a front end of the moveable panel 2a is still in the closed position. Further, the moveable panel 2a may be in an open position as illustrated in Fig. 1, which is a position wherein the moveable panel 2a is slid open and the first roof opening 3a is partly or completely exposed.

It is noted that the illustrated vehicle roof 1 belongs to a passenger car. The present invention is however not limited to passenger cars. Any other kind of vehicles that may be provided with a moveable panel are contemplated as well.

Further details of the roof assembly and roof panel are disclosed in US 2020/0276891 A1 the contents of which are incorporated herein by reference thereto.

The open roof assembly further comprises an illumination system. Fig. 2 shows a pattern of reflective dots that are arranged on a surface of the moveable panel 2a and/or the fixed panel 2b. In the prior art system, a light source 21, e.g., a LED or an incandescent lamp or any other suitable light source, directs light into a light guide 22, which may be cylindrical unit of transparent material. As known in the art, light may propagate through the light guide 22. Due to total internal reflection at a boundary between the material of the light guide 22 and the surrounding air, the light is retained in the light guide 22. Where the surface of the light guide 22 is not in contact with air, light may exit the light guide 22 or be reflected back into the light guide 22 at an angle such that the light may exit the light guide 22 at an opposite surface. With a known suitable configuration, the light originating from the light source 21 propagates through the light guide 22 and into a transparent panel on which the out-coupling pattern 20 is provided. For example, the out-coupling pattern 20 may be formed from a reflective paint or ink, e.g., a white paint or ink. As above mentioned, the dots of reflective paint or ink prevent total internal reflection of the light rays. Instead, the light rays impinging on the reflective dots reflect under another angle and are enabled to exit the transparent panel at the opposite surface. With a suitable configuration, it is thus enabled to direct the light from the light source 21 to the interior of a vehicle.

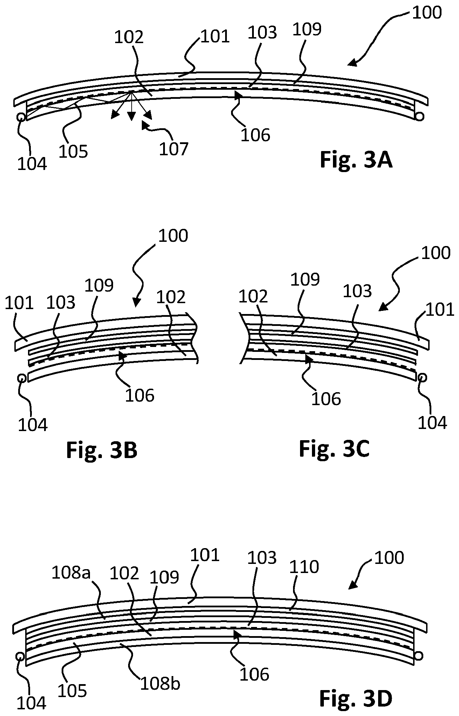

Fig. 3A shows a cross-section of a multi-layered glass panel assembly 100 for use in the open roof assembly according Fig. 1, wherein an exterior glass ply 101 (second or optional ply) and an interior glass ply 102 (first ply) are attached by an interlayer 103 (first layer) and an interlayer 109 (second layer). Such interlayer per se is known in the art. For example, the interlayers 103 and 109 may be formed of EVA or PVB. Other materials to form a flexible foil are known and suitable as well.

At a side edge of the interior or first glass ply 102, a light source 104 is provided. The light source 104 may be any light source suitable for coupling light 105 into the interior glass ply 102 through its side edge. For example, known light sources are LED's directing light directly into the side edge of the interior glass ply 102 or, alternatively or additionally, an elongated, side-emitting light guide arranged next to the side edge of the interior glass ply 102 (cf. Fig. 3A).

As hereinabove also described in relation to Fig. 3A, an out-coupling pattern 106 is provided at a surface of the interior or first glass ply 102. In particular, the out-coupling pattern 106 is arranged at an interface between the interior first glass ply 102 and the first interlayer 103. The interior first glass ply 102 and the first interlayer 103 are adjacent to each other, which means they are attached directly to each other or through the outcoupling pattern 106. As shown, a ray of light 105 propagates through the interior glass ply 102 and may impinge on a scattering particle of the out-coupling pattern 106. Upon impingement, the ray of light 105 is at least partly reflected and reflected light rays 107 are enabled to leave the interior glass ply 102 at an opposite surface of the interior glass ply 102 and is thus emitted into an interior passenger compartment 108 of a vehicle.

According to the invention, the first layer or interlayer 103 will have a lower transparency than the second layer or interlayer 109, while the second or outer ply may have a lower transparency than the first or inner ply 102. Thus, the second layer 109 and, optionally, the second ply 101 are used to reduce the transparency while the first ply 102 and the first layer 103 are used to enhance the efficiency of the light reflection of light source 104. As an example, the following plies/layers can be used: 3.85 mm dark outer glass as second ply 101 (light transmission ~18%), 0.38 mm first and second layers 103 and 109 of EVA and 2.1 mm ultra-clear inner glass as first ply 102.

Fig. 3B and Fig. 3C show a first and a second embodiment, respectively, for manufacturing the multi-layered panel assembly 100 of Fig. 3A. In the first embodiment of Fig. 3B, the out-coupling pattern 106 is provided on a surface of the interlayer 103. The surface with the out-coupling pattern 106 thereon is then attached to a surface of the interior glass ply 102, e.g., by application of heat and pressure in an autoclave.

The interlayer material may be a flexible foil and the out-coupling pattern 106 may be provided on the interlayer material by a simple processing technique, e.g., inkjet printing. Since the flexible foil may for example be stored on a roll, the flexible foil may be provided with the out-coupling pattern 106 using a common roll-to-roll inkjet printer.

In the embodiment of Fig. 3C, the outcoupling pattern is provided on the upper surface of the first or inner ply 102.

Fig. 3D shows an embodiment of a multi-layered panel assembly 100 for use in an open roof assembly according to the present invention, wherein further a first and a second functional layer 108a and 108b are introduced compared to the embodiment of Fig. 3A. In this embodiment, between the exterior glass panel 101 and the second interlayer 109 or between the interlayers 103 and 109, the first functional layer 108a is provided. The first functional layer 108a may essentially be any functional layer. For example, a switchable sun-shading layer like an electrochromic layer, SPD layer or PDLC layer may be provided to control an amount of exterior light passing through the multi-layered panel assembly 100. The first functional layer 108a may, alternatively or additionally, comprise a passive layer such as an infrared-light filtering layer, as known in the art. Furthermore, a third transparent layer 110 may be applied on top of the first functional layer 108a, which has a low transparency to reduce the visibility of the first functional layer 108a from the outside of the vehicle.

The second functional layer 108b is provided on an interior side of the interior glass panel 102. Thus, light coming from the light source 104 and redirected by the out-coupling pattern 106 into the vehicle interior passes through the second functional layer 108b. This second functional layer 108b may therefore be a functional layer that uses this light. For example, the second functional layer 108b may be a display layer and in particular a liquid crystal display (LCD) layer. As a planar source of light, the micro-dot out-coupling pattern 106 is suitable as a source of backlight for such an LCD display layer. Moreover, during daylight conditions, the LCD display layer may also be used as a means for filtering the light or for shielding against an excessive amount of light, thereby functioning as a sunshade, in addition to or as an alternative for the first functional layer 108a.

As apparent to those skilled in the art, the first and the second functional layers 108a, 108b may provide for any other function as well, wherein each functional layer may be an active layer or a passive layer.

It is noted that in this embodiment of Fig. 3D, two additional functional layers 108a, 108b have been shown and described. As apparent to those skilled in the art, more functional layers may be added or either one of the shown functional layers 108a, 108b may be omitted, depending on the desired functionality of the multi-layered panel assembly 100.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the spirit and scope of the invention, and all such modifications as would be apparent to one skilled in the art are intended to be included within the scope of the following claims.

## Claims

1. A transparent roof panel assembly for a vehicle roof, the roof panel assembly comprising
• a panel having at least a transparent area, the panel being configured to be arranged over an opening in the vehicle roof to allow visible light to pass in a first direction through the transparent area, the first direction extending between an exterior of the vehicle and an interior of the vehicle and substantially perpendicular to a surface of the panel
• a light source arranged to provide light in the panel in a second direction, wherein the second direction is substantially perpendicular to the first direction,
the panel comprising:
• a first transparent ply of rigid material having a first main surface and a second main surface opposite the first main surface,
• a first transparent layer of flexible material arranged adjacent to the first main surface
• the light source being configured to provide light in the first transparent ply such that at least a part of the light propagates between the first main surface and the second main surface through the first transparent ply,
• a light outcoupling pattern arranged between the first main surface of the first transparent ply and the first transparent layer, wherein the light outcoupling pattern is configured for scattering at least a part of the light propagating in the first transparent ply such that at least a part of the propagating light exits the first transparent ply through the second main surface, and
• a second transparent layer of flexible material provided above the first transparent layer on a side thereof opposite to the first transparent ply, the second transparent layer having a transparency which is less than that of the first transparent layer.

2. The roof panel assembly of claim 1, comprising a second transparent ply of rigid material provided above the second transparent layer and having a transparency which is equal to or less than that of the first transparent ply.

3. The roof panel assembly of claim 1 or 2, wherein the first ply has a visible-light transparency larger than 50%, preferably larger than 70% and more preferably larger than 80%.

4. The roof panel assembly of any of claims, wherein the first transparent layer has a visible-light transparency larger than 50%, preferably larger than 70% and more preferably larger than 80%.

5. The roof panel assembly of any of claims 1 - 4, wherein the second transparent layer has a visible-light transparency such that the total visible light transparency of the panel is between 5 and 30%, preferably between 8 and 20%.

6. The roof panel assembly of claim 2, wherein one or more coatings or layers having a low UV and IR transmission are arranged between the second transparent layer and the second transparent ply.

7. The roof panel assembly of claim 2, wherein at least a functional layer, such as an optically switchable layer and/or a third transparent layer are arranged between the second transparent layer and the second transparent ply.

8. The roof panel assembly of claim 7, wherein the third transparent layer has a transparency which is equal to or less than that of the first transparent layer.

9. The roof panel assembly of claim 1, wherein the first transparent ply is made of glass or plastics.

10. The roof panel assembly of claim 2, wherein the second transparent ply is made of glass or plastics.

11. The roof panel assembly of claim 1, wherein the first and/or second transparent layer is made as a foil of plastics like EVA or PVB.

12. A transparent roof panel assembly for a vehicle roof, the roof panel assembly comprising
• a panel having at least a transparent area, the panel being configured to be arranged over an opening in the vehicle roof to allow visible light to pass in a first direction through the transparent area, the first direction extending between an exterior of the vehicle and an interior of the vehicle and substantially perpendicular to a surface of the panel
• a light source arranged to provide light in the panel in a second direction, wherein the second direction is substantially perpendicular to the first direction,
the panel comprising:
• a first transparent ply having a first main surface and a second main surface opposite the first main surface,
• a first transparent layer arranged adjacent to the first main surface,
• the light source being configured to provide light in the first transparent ply such that at least a part of the light propagates between the first main surface and the second main surface through the first transparent ply,
• a light outcoupling pattern arranged between the first main surface of the first transparent ply and the first transparent layer, wherein the light outcoupling pattern is configured for scattering at least a part of the light propagating in the first transparent ply such that at least a part of the propagating light exits the first transparent ply through the second main surface,
• a second transparent layer of flexible material provided above the first transparent layer on a side thereof opposite to the first transparent ply, the second transparent layer having a transparency which is less than that of the first transparent layer, and
• a second transparent ply of rigid material provided above the second transparent layer on a side thereof opposite to the first transparent layer and having a transparency which is equal to or less than that of the first transparent ply.
